# EUROPÄISCHE PATENTSCHRIFT

(11) **EP 0 816 367 B1**
(45) Veröffentlichungstag und Bekanntmachung des Hinweises auf die Patenterteilung: **04.04.2001**
(21) Anmeldenummer: 96201770.3
(22) Anmeldetag: 25.06.1996
(51) Int. Cl.: C07F 7/22

(54) **Monovinylzinntrihalogenide und Verfahren zu ihrer Herstellung**
Monovinyl tin trihalides and process for their preparation
Trihalogénures de monovinylétain et procédé pour les préparer

(43) Veröffentlichungstag der Anmeldung: 07.01.1998
(73) Patentinhaber: Crompton GmbH, 59192 Bergkamen (DE)
(72) Erfinder: Kapries, Andrea, 59387 Ascheberg-Herbern (DE); Stewen, Ulrich, Dr., 58239 Schwerte (DE); Weinberg, Udo, 59192 Bergkamen (DE)

(56) Entgegenhaltungen:
- DE-A- 2 748 370

## Beschreibung

Die Erfindung betrifft neue Monovinylzinntrihalogenide aus 1,3-Diketonen, Zinn-ll-halogeniden und Halogensäuren sowie ein Verfahren zur Herstellung der neuen Monovinylzinntrihalogenide.

Organische Zinnverbindungen haben sich seit langen Jahren etabliert als fester Bestandteil in Rezepturen auf dem Gebiet der Pflanzenschutzmittel und Antifoulingwirkstoffe, als Stabilisatoren für thermoplastische Kunststoffe wie insbesondere polymerisierte Vinylchlorid-Polymere oder Co-Polymere, als Katalysatoren für die Herstellung von Polyurethanen oder Siliconharzen sowie zur Erzeugung von dotierten oder undotierten SnO₂-Beschichtungen auf Glas oder keramischen Oberflächen.

Die überwiegende Zahl der publizierten Verfahren führt zu Verbindungen, welche keine an Zinn gebundene Vinylgruppen enthalten und somit von weiteren interessanten Umsetzungsmöglichkeiten ausgeschlossen sind.

Verfahren zur Herstellung von Organozinnverbindungen mit direkt an Zinn gebundene Vinylgruppen sind beispielsweise bekannt aus W. P. Neumann, Die organische Chemie des Zinns, Ferdinand Enke Verlag, Stuttgart 1967; P. G. Harrison, Chemistry of Tin, Blackie, Glasgow and London, 1989; M. Pereyre, J. P. Quintard and A. Rahm, Tin in Organic Synthesis,Butterworth, London, 1987; R. C. Poller, The Chemistry of Organotin Compounds, Logos Press Limited, 1970; W. P. Neumann, Synthesis 1987, 665;T. N. Mitchell, Synthesis 1992, 803; I. Omae, Organotin Chemistry, Elsevier, Amsterdam 1989.

Hierin sind die folgenden Synthesevarianten beschrieben:
- Alkylierung von SnCl₄ oder Organozinnverbindungen mit Vinyl-Grignard-oder Vinyl-Lithium-Verbindungen;
- Hydrostannierung von substituierten Acetylenderivaten;
- Additonen von Triorganozinn-Metallverbindungen (z. B. R₃SnSnR₃, R₃SnSiR₃, Bu₃SnAlEt₂, (Bu₃Sn)₂Zn);
- α-β-Eliminierung von geeignet substituierten, an Zinn gebundenen Alkylresten.

Sämtlichen Varianten ist gemeinsam, daß sie sehr aufwendig und daher für die großtechnische Realisierung nicht oder nur bedingt geeignet sind.

Aus der DE-OS 27 48 370 sowie J. Organomet. Chem., 165 (1979) 187 - 198 ist ein Verfahren zur Herstellung von Vinylzinntrihalogeniden bekannt, gemäß welchem Acetylencarbonsäureester mit Zinn-II-halogeniden und Halogenwasserstoffen in Gegenwart polarer organischer Lösungsmittel bei Reaktionszeiten von 10 - 40 Stunden zu Carbonsäureestergruppen enthaltenden Vinylzinnverbindungen umgesetzt werden.

Es wurde nun gefunden, daß man Vinylzinnverbindungen der allgemeinen Formel (I) 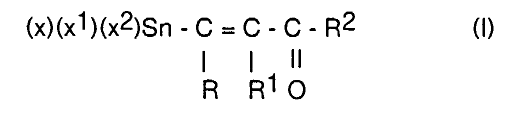 worin R, R² gleich oder verschieden, gegebenenfalls substituierte Alkylgruppen mit 1 - 5 C-Atomen, Cycloalkylgruppen mit 5 - 10 C-Atomen, Arylgruppen mit 6 - 12 C-Atomen, Alkylarylgruppen und/oder Arylalkylgruppen mit 7- 12 C-Atomen, R¹ = H oder R oder R² ist und X, X¹, X² gleich oder verschieden Chlor, Brom und Jod sein können, unter praxisgerechten Bedingungen in kurzen Reaktionszeiten und ohne aufwendige Aufarbeitungszeiten in ausreichender Reinheit erhält, durch Umsetzung von Verbindungen der allgemeinen Formel II 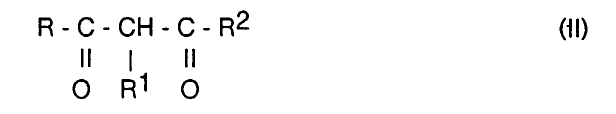 worin R, R¹, R² die oben genannte Bedeutung haben, vorzugsweise R, R² ein Methylrest oder Phenylrest und R¹ Wasserstoff ist, mit wasserfreiem Zinn-ll-chlorid, -bromid oder -jodid, gegebenenfalls in Gegenwart von inerten Lösungsmitteln wie Ethern oder aliphatischen Kohlenwasserstoffen bei -10 bis 100 °C, vorzugsweise 20 - 50 °C mit Halogensäuren der allgemeinen Formel III

X-R³ (III),

worin X = Cl, Br oder J und R³ = H oder der Rest -COR⁴ sein kann, mit R⁴ = -R⁵-CH₃, -R⁵-CO-X, worin R⁵ = -(CH₂)ₙ- mit n = 0 - 10, vorzugsweise 0 - 5, oder ein gegebenenfalls substituierter cycloaliphatischer, araliphatischer oder aromatischer Rest sein kann.

Die Reaktionszeiten liegen zwischen 0,5 - 5 h, bei der bevorzugten Reaktionstemperatur von 20 - 50 °C jedoch in der Regel unterhalb von 3 h im Bereich von 1,5 - 2,5 h.

Als gegebenenfalls mitverwendbare Lösungsmittel sind aliphatische, cycloaliphatische oder cyclische Ether wie insbesondere Diethylether, Tetrahydrofuran oder Dioxan und gegebenenfalls halogenierte Kohlenwasserstoffe wie Pentan, Hexan, Heptan, Oktan, Decan sowie deren Isomere; Methylenchlorid, Chloroform, Tetrachlorkohlenstoff, Dichlorethylen, Perchlorethylen geeignet. Vorzugsweise werden die relativ niedrig siedenden toxikologisch unbedenklichen reinen Kohlenwasserstoffe mit 6 - 10 C-Atomen und Dialkylether mit 4 - 8 C-Atomen eingesetzt.

Die erfindungsgemäß mitverwendeten Zinn-II-halogenide sind handelsübliche Produkte mit Reinheitsgraden von >95 %.

Als anorganische und/oder organische Halogensäuren werden erfindungsgemäß Chlorwasserstoff, Bromwasserstoff, Jodwasserstoff, die Säurehalogenide der organischen homologen Reihen der Mono- und Polycarbonsäuren wie insbesondere Acetylchlorid, Propionylchlorid, Butyrylchlorid, Valëroylchlorid, Octylchlorid, Malonylchlorid, Succinylchlorid mitverwendet.

Cycloaliphatische und aromatische Säurehalogenide, abgeleitet von Benzoesäure, Phthalsäure, Isophthalsäure, Terephthalsäure, Phenylendiessigsäure sowie deren Hexahydrovarianten sind ebenfalls mitverwendbar.

Erfindungsgemäß bevorzugt werden die Säurechloride der kurzkettigen Monocarbonsäuren wie insbesondere Acetylchlorid, n-Propionylchlorid, n-Butyrylchlorid, Benzoylchlorid.

Die Reaktion kann innerhalb eines weiteren Temperaturbereiches von -10 bis 100 °C durchgeführt werden, gegebenenfalls bei Normaldruck unter Rückfluß des Lösungsmittels gegebenenfalls im Druckreaktor bei dem sich einstellenden Systemdruck.

Zur Vermeidung von Nebenreaktionen und aus verfahrenstechnischen Gründen wie insbesondere Reaktionszeiten und Prozeßführung werden Reaktionstemperaturen von 10 - 80 °C, insbesondere von 20 - 50 °C, unter Normaldruck bevorzugt.

Gemäß der erfindungsgemäß bevorzugten Verfahrensweise werden unter Inertgas und Ausschluß von Feuchtigkeit bei Raumtemperatur Zinn-II-halogenid, vorzugsweise Zinn-ll-chlorid, und ein 1,3-Diketon der allgemeinen Formel II, gegebenenfalls unter Mitverwendung eines Lösungsmittels, vorgelegt und die Halogensäure oder die erfindungsgemäß bevorzugten Säurehalogenide dem intensiv durchmischten Reaktionsgemisch zudosiert.

Die Reaktionstemperatur kann dabei durch die Dosierrate und/oder durch unterstützende externe Kühlung bzw. durch Siedekühlung bei Rückfluß des Lösungsmittels erfolgen.

Nach Zugabe der Halogensäure reicht in der Regel eine 2 - 3stündige Nachreaktion bei der gegebenen Reaktionstemperatur unter ständiger guter Durchmischung (z. B. Rührung) aus, um die Reaktion zu vervollständigen.

Das Verhältnis der Komponenten Zinn-ll-halogenid : Verbindung der Formel II: Halogensäure der Formel III wird gemäß der Reaktionsgleichung 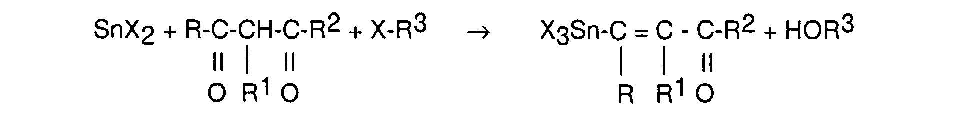 worin die Substituenten die angegebene Bedeutung haben, vorzugsweise in equimolaren Mengen eingesetzt. Überschüsse der jeweiligen Komponenten sind zwar möglich, erfindungsgemäß aber nicht bevorzugt, da zusätzliche Reinigungsstufen für das Endprodukt erforderlich werden könnten.

Bei Mitverwendung von Lösungsmitteln wird deren Menge so bemessen, daß eine einwandfreie Prozeßführung (Durchmischung, Abführung der Reaktionswärme) gewährleistet ist. Da das Reaktionsprodukt aber möglichst quantitativ aus der Reaktionsmischung ausfallen sollte, ist die Menge an Lösemittel dem Löslichkeitsprodukt anzupassen.

Beim Arbeiten unter Rückflußbedingungen kann daher bereits das Lösungsmittel ganz oder teilweise, gegebenenfalls unterhalb des Normaldrucks, gegebenenfalls mit Hilfe eines durch die Reaktionsmischung geleiteten Trägergases abdestilliert werden, wobei auch die gemäß der Reaktionsgleichung gebildete Verbindung HOR³, soweit diese unter den gegebenen Bedingungen destilliert, entfernt werden kann.

Soweit das Reaktionsprodukt sofort als fester Niederschlag anfällt, kann dieser durch übliche Methoden (z. B. Abfiltrieren) von Nebenprodukten wie HOR³ abgetrennt und von noch anhaftenden Mengen Lösungsmitteln durch Trocknen befreit werden. In der Regel reicht der Reinheitsgrad des so erhaltenen Produktes für die weitere Verwendung aus. Zur Erzielung von höchsten Reinheitsgraden wird noch ein- oder mehrmals mit wenig Lösungsmittel nachgewaschen.

Fällt das Endprodukt - bei einer Reaktionsführung ohne Lösungsmittel oder nachdem dies bereits frühzeitig aus der Reaktionsmischung entfernt wurde - als viskose oder teilkristalline Mischung an, kann die Kristallisation durch Zugabe geringer Mengen an Ethern oder Kohlenwasserstoffen beschleunigt werden, wobei dann gleichzeitig Nebenprodukte wie HOR³ entfernbar sind.

Eine Nachbehandlung mit absorbierenden Mitteln, wie Aktivkohle, ist in aller Regel nicht mehr erforderlich.

Die erfindungsgemäßen Verbindungen der allgemeinen Formel I sind wertvolle Zwischenprodukte für die Herstellung von neuartigen Pflanzenschutzmitteln und Antifoulinganstrichen, bei denen sie in die gegebenenfalls polymere Struktur mit eingebaut werden können, sowie als Co-Monomere mit stabilisierender Wirkung in PVC-Copolymeren oder als Co-Monomere mit katalysierender Wirkung oder als Katalysatoren bei der Herstellung von Polyurethanschäumen oder Siliconmassen. Anhand der nachfolgenden Beispiele wird das Verfahren zur Herstellung der erfindungsgemäßen Verbindungen der allgemeinen Formel (I) näher erläutert.

### Beispiele

### Beispiel 1

94,8 g (0,5 mol) Zinn-ll-chlorid und 50 g (0,5 mol) Acetylaceton wurden bei Raumtemperatur in 200 ml Diethylether vorgelegt. Innerhalb von 15 min wurden 39,3 g (0,5 mol) Acetylchlorid zudosiert. Die Temperatur stieg hierbei auf 36 °C an. Nach 2 h Nachreaktion bei Raumtemperatur wurden die ausgefallenen weißen Kristalle abfiltriert und zweimal mit je 50 ml Diethlether gewaschen. Nach Trocknung im Vakuum wurden 88 g (57 % d. Th.) 1-Methyl-but-1-en-3-onylzinntrichlorid (Cl₃Sn-C(CH₃) = CH-CO-CH₃) mit einem Schmelzpunkt von 129 - 130 °C isoliert.

Aus der Mutterlauge konnten durch Zugabe von 200 ml n-Pentan weitere 45 g (29 % d. Th.) ausgefällt werden.
- ¹H-NMR (CDCl₃):: δ = 2.51 (s, 3H, Sn-C(CH₃)=C, ³J_{Sn} = 144 Hz), 2.63 (s, 3H, CO-CH₃), 7.24 - 7.29 (m, 1H, H_{Vinyl}, ³J_{Sn} = 420 Hz)
- ¹³C-NMR(CDCl₃):: δ = 22.3 (=C-CH₃), 28.6 (CO-CH₃), 133.9 (C=CH), 168.4 (=C-CH₃), 201.1 (C=O).

### Beispiel 2

94,8 g (0,5 mol) Zinn-ll-chlorid und 50 g (0,5 mol) Acetylaceton wurden bei Raumtemperatur in 200 ml n-Pentan vorgelegt. Innerhalb von 15 min wurden 61 g (0,5 mol) Acetylbromid zudosiert. Nach 2 h Nachreaktion bei Raumtemperatur wurden die ausgefallenen Kristalle abgetrennt, mit Diethylether gewaschen und im Vakuum getrocknet.

141 g (80 % d.Th.) 1-Methyl-but-1-en-3-onyl-zinnbromiddichlorid (BrCl₂Sn-C(CH₃)= CH-CO-CH₃) mit einem Schmelzpunkt von 119 °C wurden isoliert. Die Ausbeute wurde durch Einengen der Mutterlauge und erneute Kristallisation auf >95 % erhöht.

### Beispiel 3

94,8 g (0,5 mol) Zinn-ll-chlorid und 50 g (0,5 mol) Acetylaceton wurden bei Raumtemperatur vorgelegt. Innerhalb von 45 min wurden 39,3 g (0,5 mol) Acetylchlorid zudosiert, wobei die Temperatur auf 45 °C anstieg. Das hochviskose, teilweise kristalline Reaktionsgemisch wurde 2 h gerührt, mit 50 ml n-Pentan versetzt und der entstandene Feststoff abgetrennt. Nach Waschen mit 100 ml n-Pentan und Trocknen wurden 140 g (92 % d. Th.) 1-Methyl-but-1-en-3onyl-zinntrichlorid isoliert.

### Beispiel 4

94,8 g (0,5 mol) Zinn-ll-chlorid und 81,1 g (0,5 mol) Benzoylaceton wurden bei Raumtemperatur in 200 ml Diethylether vorgelegt. 39,3 g (0,5 mol) Acetylchlorid wurden innerhalb von 15 min zudosiert, wobei ein Temperaturanstieg auf 36 °C verzeichnet wurde. Nach 2 h Nachreaktion bei Raumtemperatur wurde der ausgefallene, leicht gelbe kristalline Niederschlag abgetrennt, zweimal mit je 50 ml Diethylether gewaschen und im Vakuum getrocknet.

110 g (60 % d.Th.) 1-Methyl-prop-1-en-3-onyl-3-phenyl-zinntrichlorid (Cl₃Sn-C(CH₃)= CH-CO-Ph) mit einem Schmelzpunkt von 206 - 208 °C wurden isoliert, wobei die Ausbeute durch Einengen der Mutterlauge auf >90 % erhöht wurde.
- Cl-Gehalt:: 28,3 % gef.; 28,7 % theor.
- ¹H-NMR (Aceton-d₆):: δ = 2.55 (s, 3H, Sn-C(CH₃)=C, ³J_{Sn} = 148 Hz), 7,68 - 8.47 (m, 5Hₐᵣₒₘ, 1H_{Vinyl})
- ¹³C-NMR(Aceton-d₆):: δ = 22.2 (=C-CH₃), 125.3, 130.7, 131.8, 133.7 (Cₐᵣₒₘ), 137.9 (C=C-H), 185.1 (=C-CH₃), 191.7 (C=O).

### Beispiel 5

94,8 g (0,5 mol) Zinn-ll-chlorid wurden in 200 ml Diethylether vorgelegt und 81,1 g (0,5 mol) Benzoylaceton zugegeben. 61 g (0,5 mol) Acetylbromid wurden innerhalb von 15 min zudosiert, wobei die Reaktionstemperatur auf 38 °C stieg.

Nach 2 h Nachreaktion bei Raumtemperatur wurde der leicht gelbe, kristalline Niederschlag abfiltriert, mit wenig (2 x 20 ml) Diethylether gewaschen und im Vakuum getrocknet.

104 g (50 % d. Th.) 1-Methyl-prop-1-en-3-onyl-3-phenyl-zinnbromiddichlorid (BrCl₂Sn-C(CH₃) = CH-CO-Ph) mit einem Schmelzpunkt von 199 - 201 °C wurden isoliert, wobei die Ausbeute durch Aufarbeiten der Mutterlauge auf >90 % erhöht wurde.
- Sn-Gehalt:: 28,3 % gef.; 28,6 % theor.

### Beispiel 6

94,8 g (0,5 mol) Zinn-ll-chlorid wurden in 200 ml Diethylether vorgelegt und 50 g (0,5 mol) Acetylaceton zugegeben. 70 g (0,5 mol) Benzoylchlorid wurden innerhalb von 15 min zudosiert, hierbei stieg die Temperatur auf 30 °C. Nach 3 h Nachreaktion unter Rückflußtemperatur wurde der weiße, kristalline Niederschlag abgetrennt und im Vakuum getrocknet.

113g (73 % d. Th.) 1-Methyl-but-1-en-3-onyl-zinntrichlorid mit einem Schmelzpunkt von 128 - 129 °C wurden isoliert.

### Beispiel 7

Durchführung analog Beispiel 6: Statt Benzoylchlorid wurden 45,3 g (0,5 mol) Acrylsäurechlorid eingesetzt. Die Ausbeute betrug 80 % d. Th.

### Beispiel 8

Durchführung analog Beispiel 6: Statt Benzoylchlorid wurden 38,7 g (0,26 mol) Cyclohexan-carbonsäurechlorid eingesetzt. Die Ausbeute des direkt ausgefallenen Produktes war 41 g (50 % d. Th.), die durch weiteres Einengen des Filtrates auf >95 % d. Th. gesteigert wurde.

### Beispiel 9

Durchführung analog Beispiel 6: Statt 0,5 mol Benzoylchlorid wurden 0,25 mol Phthalsäure-dichlorid eingesetzt. Die Ausbeute betrug ca. 90 %, jedoch verunreinigt mit Phthal-säure.

### Beispiel 10

Durchführung analog Beispiel 6: Aus der Umsetzung von 50 g (0,26 mol) Zinn-ll-chlorid und 26,5 g (0.26 mol) Acetylaceton mit 44 g (0,26 mol) Zimtsäurechlorid in 150 ml Diethylether wurden in quantitativer Ausbeute 81,4 g 1-Methyl-but-1-en-3-onyl-zinntrichlorid isoliert.

### Beispiel 11

39,8 g (0,21 mol) Zinn-ll-chlorid und 21,0 g (0,21 mol) Acetylaceton wurden in 200 ml Diethylether vorgelegt. 38,8 g (0,21 mol) Benzoylbromid wurden unter Rühren bei Raumtemperatur innerhalb von 15 min zudosiert, wobei ein Temperaturanstieg auf Rückflußtemperatur verzeichnet wurde. Nach 1 h Nachreaktion bei Rückflußtemperatur wurde abgekühlt und der kristalline Niederschlag abgetrennt. 48 g (65 % d. Th.) 1-Methyl-but-1-en-3-onyl-zinnbromiddichlorid (BrCl₂Sn-C(CH₃)=CH-CO-CH₃) wurden isoliert.
- ¹H-NMR (CDCl₃):: δ = 2.51 (s, 3H, Sn-C(CH₃)=C), ³J_{Sn} = 140 Hz), 2.63 - (s, 3H, CO-CH₃), 7.16 - 7.25 (m, 1H, H_{vinyl}).
- ¹³C-NMR (CDCl₃):: δ =22.3 (=C-CH₃, ²J_{Sn} = 97 Hz), 28.7 (CO-CH₃), 133.7 (C=CH, ²J_{Sn} = 89 Hz), 168.8 (=C-CH₃, ¹J_{Sn} = 1006 Hz), 200.8 (C=O, ³J_{Sn} = 83 Hz

### Beispiel 12

Durchführung analog Beispiel 6: Aus der Umsetzung von 22,4 g (0,08 mol) Zinn-ll-bromid und 8,0 g (0,08 mol) Acetylaceton mit 9,8 g (0,08 mol) Acetylbromid in 200 mL Diethylether wurden nach Einengung der Reaktionslösung 34,0 g (96 % d. Th.) 1-Methyl-but-1-en-3-onyl-zinntribromid (Br₃Sn-C(CH₃)=CH-CO-CH₃) mit einem Schmelzpunkt von 110 - 112 °C isoliert.
- ¹H-NMR (CDCl₃):: δ = 2.47 (s, 3H, Sn-C(CH₃)=C), ³J_{Sn} = 140 Hz), 2.63 (s, 3H, CO-CH₃), 7.09 - 7.11 (m, 1 H, H_{vinyl}, ³J_{Sn} = 391; 407 Hz).
- ¹³C-NMR (CDCl₃):: δ = 22.3 (=C-CH₃, ²J_{Sn} = 96 Hz), 28.9 (CO-CH₃), 133.7 (C=CH, ²J_{Sn} = 77 Hz), 168.2 (=C-CH₃) 200.7 (C=O).

### Beispiel 13

Durchführung analog Beispiel 6: Aus der Umsetzung von 26,6 g (0,096 mol) Zinn-II-bromid und 9,6 g (0,096 mol) Acetylaceton mit 7,6 g (0,096 mol) Acetylchlorid in 200 mL Diethylether wurden nach Einengung der Reaktionslösung 36,4 (96 % d. Th.), 1-Methyl-but-1-en-3-onyl-zinndibromidchlorid (Br₂ClSn-C(CH₃)=CH-CO-CH₃) mit einem Schmelzpunkt von 112 - 115 °C isoliert.
- ¹H-NMR (CDCl₃):: δ = 2.48 (s, 3H, Sn-C(CH₃)=C, ³J_{Sn} = 140 Hz), 2.63 (s, 3H, CO-CH₃), 7.08 - 7.22 (m, 1 H, H_{vinyl}).
- ¹³C-NMR (CDCl₃):: δ =22.4 (=C-CH₃, ²J_{Sn} = 96 Hz), 28.9 (CO-CH₃), 133.3 (C=CH, ²J_{Sn} = 78 Hz), 168.8 (=C-CH₃) 200.8 (C=O).

## Patentansprüche

1. Verbindungen der allgemeinen Formel (I) 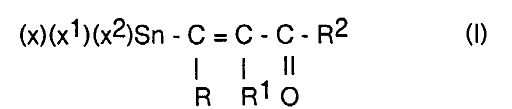 worin R, R² gleich oder verschieden, gegebenenfalls substituierte Kohlenwasserstoffe, R¹ = H, R oder R² ist und X, X¹, X² gleich oder verschieden Chlor, Brom oder Jod sein können.

2. Verbindungen der allgemeinen Formel I, worin R, R² gleich oder verschieden, gegebenenfalls substituierte Alkylgruppen mit 1 - 5 C-Atomen, Arylgruppen mit 6 - 12 C-Atomen, Alkylarylgruppen oder Arylalkylgruppen mit 7 - 12 C-Atomen und X, X¹, X² Chlor oder Brom sind.

3. Verbindungen der allgemeinen Formel I, worin R, R² Methylgruppen, R¹ Wasserstoff und X, X¹, X² gleich oder verschieden Chlor oder Brom sind.

4. Verfahren zur Herstellung von Verbindungen der allgemeinen Formel 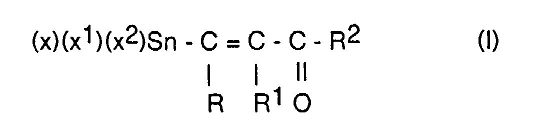 worin R, R² gleich oder verschieden, gegebenenfalls substituierte Kohlenwasserstoffe, R¹ = H, R oder R² ist und X, X¹, X² gleich oder verschieden Chlor, Brom oder Jod sein können, durch Umsetzung einer Verbindung der allgemeinen Formel II 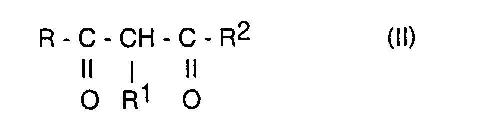 worin R, R¹, R² die genannte Bedeutung haben mit einer Verbindung der Formel (IV) SnX₂, worin X Chlor, Brom oder Jod sein kann, gegebenenfalls unter Mitverwendung inerter wasserfreier, organischer Lösungsmittel und Halogensäuren der allgemeinen Formel (III) X-R³, worin X = Chlor, Brom oder Jod und R³ der Rest -C(O)-R⁴ sein kann, mit R⁴ = -R⁵-CH₃, -R⁵-C(O)X, worin R⁵ = -(CH₂)n- mit n = 0 - 10 ist oder ein gegebenenfalls substituierter cycloaliphatischer, aromatischer oder araliphatischer Rest sein kann, bei Temperaturen von 0 - 100 °C und anschließender Isolierung der Verbindungen der allgemeinen Formel (I) nach an sich bekannten Verfahren.

5. Verfahren gemäß Anspruch 4, dadurch gekennzeichnet, daß in den eingesetzten Verbindungen der allgemeinen Formel (II) R, R² gleich oder verschieden, gegebenenfalls substituierte Alkylgruppen mit 1 - 5 C-Atomen, Arylgruppen mit 6 - 12 C-Atomen, Alkylarylgruppen oder Arylalkylgruppen mit 7 - 12 C-Atomen und X, X¹, X² Chlor, Brom oder Jod sein können.

6. Verfahren gemäß Anspruch 5, dadurch gekennzeichnet, daß in den eingesetzten Verbindungen der allgemeinen Formel (II) R, R² Methylgruppen, R¹ Wasserstoff und X, X¹, X² gleich oder verschieden Chlor oder Brom sind.

7. Verfahren gemäß Anspruch 6, dadurch gekennzeichnet, daß als Halogensäuren Verbindungen der allgemeinen Formel (III) eingesetzt werden, worin R³ eine Acylgruppe mit 1 - 4 C-Atomen oder der Benzoylrest und X Chlor, Brom oder Jod ist.

8. Verfahren gemäß Anspruch 7, dadurch gekennzeichnet, daß die Reaktion in Gegenwart von Ethern oder gegebenenfalls chlorierten Kohlenwasserstoffen bei Temperaturen von 10 - 80 °C durchgeführt wird.

9. Verbindungen der allgemeinen Formel (I), hergestellt nach einem der Verfahren der Ansprüche 4 - 8.

10. Verwendung der Verbindung der allgemeinen Formel (I) zur Herstellung von Pflanzenschutzmitteln, Antifoulinganstrichen, Stabilisatoren für Kunststoffe, Katalysatoren für die Herstellung von Polyurethanschaumstoffen und zur Vernetzung von Siliconsystemen und zur Erzeugung dotierter oder nicht dotierter Zinnoxid-Beschichtungen auf Glas, keramischen Materialien, Kunststoffen oder Natursteinen.

## Claims

1. Compounds of the general formula (I): 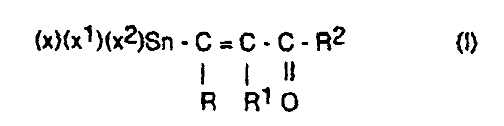 in which R and R², which are identical or different, can be optionally substituted hydrocarbons, R¹ is H, R or R² and X, X¹ and X², which are identical or different, can be chlorine, bromine or iodine.

2. Compounds of the general formula I in which R and R², which are identical or different, are optionally substituted alkyl groups having 1 - 5 C atoms, aryl groups having 6 - 12 C atoms and alkylaryl groups or arylalkyl groups having 7 - 12 C atoms and X, X¹ and X² are chlorine or bromine.

3. Compounds of the general formula I in which R and R² are methyl groups, R¹ is hydrogen and X, X¹ and X², which are identical or different, are chlorine or bromine.

4. A process for the preparation of compounds of the general formula 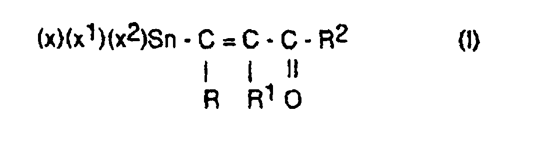 in which R and R², which are identical or different, can be optionally substituted hydrocarbons, R¹ is H, R or R² and X, X¹ and X², which are identical or different, can be chlorine, bromine or iodine, by reaction of a compound of the general formula II: 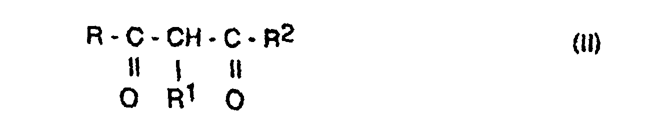 in which R, R¹ and R² are as defined, with a compound of the formula SnX₂ (IV), in which X can be chlorine, bromine or iodine, optionally using inert, anhydrous organic solvents, and with halogen acids of the general formula X-R³ (III), in which X can be chlorine, bromine or iodine and R³ can be the radical -C(O)-R⁴, where R⁴ can be -R⁵-CH₃, -R⁵-C(O)X, in which R⁵ = -(CH₂)ₙ-, where n = 0 - 10, or an optionally substituted cycloaliphatic, aromatic or araliphatic radical, at temperatures of 0 - 100°C, and subsequent isolation of the compounds of the general formula (I) by methods known per se.

5. The process as claimed in claim 4 wherein, in the compounds of the general formula (II) used, R and R², which are identical or different, can be optionally substituted alkyl groups having 1 - 5 C atoms, aryl groups having 6 - 12 C atoms and alkylaryl groups or arylalkyl groups having 7 - 12 C atoms and X, X¹ and X² can be chlorine, bromine or iodine.

6. The process as claimed in claim 5 wherein, in the compounds of the general formula (II) used, R and R² are methyl groups, R¹ is hydrogen and X, X¹ and X², which are identical or different, are chlorine or bromine.

7. The process as claimed in claim 6 wherein the halogen acids used are compounds of the general formula (III) in which R³ is an acyl group having 1 - 4 C atoms or the benzoyl radical and X is chlorine, bromine or iodine.

8. The process as claimed in claim 7 wherein the reaction is carried out in the presence of ethers or optionally chlorinated hydrocarbons at temperatures of 10 - 80°C.

9. Compounds of the general formula (I) prepared by one of the processes of claims 4 - 8.

10. Use of the compound of the general formula (I) for the manufacture of pesticides, antifouling paints, stabilizers for plastics and catalysts for the manufacture of polyurethane foams, for the crosslinking of silicone systems and for the production of doped or undoped tin oxide coatings on glass, ceramic materials, plastics or natural stones.

## Revendications

1. Composés de formule générale (I) 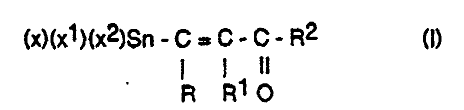 dans laquelle R, R² peuvent être identiques ou différents et représenter des hydrocarbures, le cas échéant substitués, R¹ est égal à H, R ou R² et X, X¹, X² peuvent être identiques ou différents et représenter un chlore, un brome ou un iode.

2. Composés de formule générale I, dans laquelle R, R² sont identiques ou différents et représentent des groupements alkyle le cas échéant substitués comprenant 1 à 5 atomes de carbone, des groupements aryle le cas échéant substitués comprenant 6 à 12 atomes de carbone, des groupements alkylaryle ou des groupements arylalkyle le cas échéant substitués comprenant 7 à 12 atomes de carbone et X, X¹, X² représentent un chlore ou un brome.

3. Composés de formule générale I, dans laquelle R, R² représentent des groupements méthyle, R¹ représente un hydrogène et X, X¹, X² sont identiques ou différents et représentent un chlore ou un brome.

4. Procédé pour la préparation de composés de formule générale 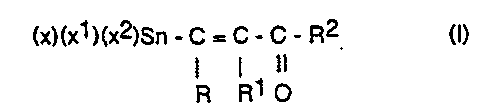 dans laquelle R, R² peuvent être identiques ou différents et représenter des hydrocarbures le cas échéant substitués, R¹ est égal à H, R ou R² et X, X¹, X² peuvent être identiques ou différents et représenter un chlore, un brome ou un iode, par transformation d'un composé de formule générale II 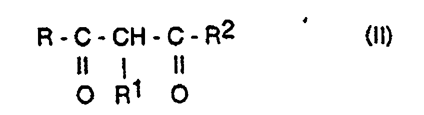 dans laquelle R, R¹, R² ont la signification mentionnée, avec un composé de formule (IV) SnX₂, dans laquelle X peut représenter un chlore, un brome ou un iode, le cas échéant avec utilisation simultanée de solvants inertes, anhydres, organiques et d'acides halogénés de formule générale (III) X-R³, dans laquelle X peut représenter un chlore, un brome ou un iode et R³ peut représenter le radical -C(O)-R⁴, avec R⁴ = -R⁵-CH₃, -R⁵-C(O)X, où R⁵ est égal à - (CH₂)ₙ- avec n = 0 à 10 ou peut représenter un radical cycloaliphatique, aromatique ou araliphatique, le cas échéant substitué, à des températures de 0 à 100°C et avec isolement consécutif des composés de formule générale (I) selon des procédés connus en soi.

5. Procédé selon la revendication 4, caractérisé en ce que, dans les composés de formule générale (II) utilisés, R, R² peuvent être identiques ou différents et représenter des groupements alkyle le cas échéant substitués comprenant 1 à 5 atomes de carbone, des groupements aryle le cas échéant substitués comprenant 6 à 12 atomes de carbone, des groupements alkylaryle ou des groupements arylalkyle le cas échéant substitués comprenant 7 à 12 atomes de carbone et X, X¹, X² peuvent représenter un chlore, un brome ou un iode.

6. Procédé selon la revendication 5, caractérisé en ce que, dans les composés de formule générale (II) utilisés, R, R² représentent des groupements méthyle, R¹ représente un hydrogène et X, X¹, X² sont identiques ou différents et représentent un chlore ou un brome.

7. Procédé selon la revendication 6, caractérisé en ce qu'on utilise comme acides halogénés des composés de formule générale (III), dans laquelle R³ est un groupement acyle comprenant 1 à 4 atomes de carbone ou le radical benzoyle et X représente un chlore, un brome ou un iode.

8. Procédé selon la revendication 7, caractérisé en ce que la réaction est réalisée en présence d'éthers ou d'hydrocarbures le cas échéant chlorés à des températures de 10 à 80°C.

9. Composés de formule générale (I) préparés selon l'un quelconque des procédés des revendications 4 à 8.

10. Utilisation du composé de formule générale (I) pour la fabrication de produits anti-parasitaires, de peintures anti-salissure, de stabilisateurs pour matières synthétiques, de catalyseurs pour la préparation de mousses de polyuréthane et pour la réticulation de systèmes siliconés, et pour l'obtention de revêtements d'oxyde d'étain dopés ou non dopés sur du verre, sur des matériaux céramiques, sur des matières synthétiques ou des pierres naturelles.
